# EUROPÄISCHE PATENTSCHRIFT

(11) **EP 3 293 554 B1**
(45) Veröffentlichungstag und Bekanntmachung des Hinweises auf die Patenterteilung: **15.03.2023**
(21) Anmeldenummer: 17190023.6
(22) Anmeldetag: 08.09.2017
(51) Int. Cl.: G02B 6/32

(54) **VORRICHTUNG UND VERFAHREN ZUR AUSRICHTUNG EINES LICHTSTRAHLS**
DEVICE AND METHOD FOR ALIGNING A LIGHT BEAM
DISPOSITIF ET PROCÉDÉ D'ALIGNEMENT D'UN RAYON LUMINEUX

(30) Priorität: 13.09.2016 DE 102016117202; 23.12.2016 DE 102016125632
(43) Veröffentlichungstag der Anmeldung: 14.03.2018
(73) Patentinhaber: SCHOTT AG, 55122 Mainz (DE)
(72) Erfinder: MEINL, Jürgen, 65329 Hohenstein-Holzhausen (DE); ASTHEIMER, Steffen, 65510 Hünstetten (DE)
(74) Vertreter: Blumbach · Zinngrebe Patentanwälte PartG mbB

(56) Entgegenhaltungen:
- DE-A1-102007 061 737
- US-A- 4 193 664
- US-A- 5 668 899
- US-A1- 2004 114 873
- US-A1- 2014 016 897
- US-B1- 7 526 162

## Beschreibung

### Gebiet der Erfindung

Die Erfindung betrifft eine Vorrichtung und ein Verfahren zur Ausrichtung eines Lichtstrahls, welcher aus einer Lichtquelle oder einem Lichtleiter austritt.

### Beschreibung

Lichtstrahlen, die aus einem Lichtleiter oder einer Lichtquelle, etwa einer optischen Faser oder einer Laserdiode austreten, zeichnen sich in der Regel durch divergente bzw. diffuse Strahlcharakteristiken aus. Für viele Anwendungen werden jedoch fokussierte oder kollimierte Lichtstrahlen benötigt, so dass ein Austrittsstrahl häufig mittels optischer Linsen oder Linsengruppen umgeformt wird. Eine Strahlformungsoptik kann etwa in einem Gehäuse verbaut sein, welches z.B. als Stecker an das Ende eines Lichtleiters angekoppelt wird. Auch kann ein Gehäuse mit Strahlformungsoptik als Halter zum Einbau einer Lichtquelle, z.B. einer Laserdiode, dienen, insbesondere, um Lasermodule mit vorgegebener Strahlcharakteristik herzustellen.

Die Druckschrift US 4,193,664 A beschreibt ein Verbindungselement zum Koppeln zweier Lichtwellenleiter, Um eine optische Faser in dem Verbindungselement radial einzustellen, wird die Faser in einem Rohr gelagert, das nahe ihrem Gegenende auf einer dünnen Membran mit radialen Einstellschrauben am anderen Ende des Rohrs montiert ist.

Die Druckschrift US 7,526,162 B1 beschreibt eine Kollimatoranordnung mit einer Hülse in welcher eine Faser gehalten ist. Die Abmessungen der Hülse sind so gewählt, dass eine X-Y-Z-Verschiebung der Hülse möglich ist. Die Position der Hülse relativ zur Linse kann durch axiales Verschieben der Hülse in einer Z-Richtung relativ zur Linse eingestellt werden.

Die Druckschrift US 2014/016897 A1 beschreibt ein justierbares faseroptisches Modul mit einer Vorrichtung mit einem inneren und einem äußeren Gehäuse, wobei in dem inneren Gehäuse ein optisches Element angeordnet ist. Das Innengehäuse ist in dem Außengehäuse angeordnet und auf der einen Seite mit zwei Schrauben gehaltert, welche ein Kippen des Innengehäuses in einer Ebene erlauben.

Das US-amerikanische Patent 6,801,688 B1 beschreibt z.B. einen Kollimator welcher Licht von einer optischen Faser aufnimmt und einen kollimierten Lichtstrahl bei erhöhtem festgelegtem Durchmesser erzeugt. Der faseroptische Kollimator weist einen Schiebeverbinder zur Aufnahme der optischen Faser auf, wobei der Schiebeverbinder entlang einer axialen Richtung beweglich in einem Kollimatorgehäuse angeordnet ist.

Das US-amerikanische Patent 6,168,319 B1 zeigt eine Kollimatoranordnung mit einer optischen Faser und einer Gradientenlinse, wobei die Komponenten innerhalb einer dünnen Röhre angebracht sind. Der Abstand zwischen der Faser und der Linse wird variiert, um eine vordefinierte Strahlbreite zu erhalten.

Das US-amerikanische Patent 4,431,267 beschreibt ein optisches System zur Erzeugung eines kollimierten Lichtstrahls, bei welchem ein Halbleiterlaser in einem tubulären Halter gegen einen Anschlag positioniert wird. Ein Linsensystem kann gegen eine Federkraft in Richtung auf den Laser bewegt werden und wenn ein kollimierter Lichtstrahl entsteht, wird ein Sperrelement fixiert, so dass das Linsensystem korrekt eingestellt ist.

Bei Kollimatoren der vorstehend beschriebenen Art, aber auch bei Systemen anderer Art, z.B. bei Fasersteckern, kann es im Rahmen der Fertigungstoleranz aller Komponenten zu Ungenauigkeiten des Strahlaustrittswinkels kommen. Mitunter kann die optische Achse des austretenden Lichts gegenüber der mechanischen Gehäuseachse im Bereich von einigen Milliradiant (mrad) oder mehr verkippt sein. Da viele Anwendungen einen genauer ausgerichteten Strahl verlangen, wäre es wünschenswert, solche Fehler zu vermeiden.

Die internationale Patentanmeldung WO 2001/026770 A1 zeigt ein Kollimationsgerät, wobei die Richtung des Strahls einstellbar ist. Das Gerät umfasst eine stationäre Platte, welche eine Strahlquelle hält, und eine bewegliche Platte auf der eine Kollimatoroptik angebracht ist.

Die internationale Patentanmeldung WO 2012/112146 A1 beschreibt eine Strahlkoppler-Anordnung mit einem Linsengehäuse-Ausrichtungssystem, welches die Ausrichtung der x- und y-Achse beibehält während eine Bewegung in z-Richtung mit geringem Aufwand ermöglicht wird.

Die in den genannten Dokumenten gezeigten Gegenstände sind jedoch für spezielle Anforderungen und relativ komplex ausgebildet. Zudem eigenen sie sich für viele Anwendungen nicht.

Eine Aufgabe der vorliegenden Erfindung ist es, einen Lichtstrahl, insbesondere einen kollimierten Lichtstrahl, auf einfache, kostengünstige und zugleich hochpräzise Weise auszurichten, wobei insbesondere Genauigkeiten im Bereich von unter einem Milliradiant ermöglicht werden sollen.

Ein Aspekt der Aufgabe der Erfindung ist es, die optische Achse eines Lichtstrahls, der aus einer Lichtquelle oder einem Lichtleiter austritt, relativ zu einem Gehäuse mit dem die Lichtquelle oder der Lichtleiter verbunden ist, auszurichten.

Ein weiterer Aspekt der Aufgabe der Erfindung ist es, eine Ausrichtbarkeit eines Lichtstrahls sowie eine mechanisch und zeitlich unabhängig davon justierbare Kollimation zu ermöglichen.

Die Aufgabe wird durch die Gegenstände der unabhängigen Ansprüche gelöst. Vorteilhafte Weiterbildungen sind Gegenstände der abhängigen Ansprüche.

Die Erfindung betrifft eine Vorrichtung zur Ausrichtung eines Lichtstrahls, welcher aus einer Lichtquelle oder einem Lichtleiter austritt. Die Vorrichtung erlaubt somit eine Einstellung der Strahlrichtung des Lichtstrahls und somit der optischen Achse entlang derer der Lichtstrahl verläuft.

Die Vorrichtung umfasst ein Außengehäuse und ein zumindest teilweise darin angeordnetes Innengehäuse. Das Außengehäuse und das Innengehäuse sind jeweils insbesondere tubulär geformt und definieren eine Längsrichtung. Es handelt sich also insbesondere um ein röhrenförmiges Gehäuse innerhalb dessen ein weiteres röhrenförmiges Gehäuse angebracht ist.

Das Innengehäuse ist ausgebildet, die Lichtquelle oder den Lichtleiter aufzunehmen. Die Lichtquelle oder der Lichtleiter kann demnach vorzugsweise entlang der Längsrichtung des Innengehäuses zumindest teilweise in das Innengehäuse eingeführt werden. Im Falle einer Lichtquelle kann vorgesehen sein, dass diese vollständig in das Innengehäuse eingebracht wird.

Das Innengehäuse ist ferner ausgebildet die Lichtquelle oder den Lichtleiter fixiert zu halten und zwar derart, dass die optische Achse des Lichtstrahls, d.h. die Richtung des Lichtstrahls, relativ zur Längsrichtung des Innengehäuses fixiert ist. Die optische Achse des Lichtstrahls und die Längsrichtung des Innengehäuses weisen demnach eine feste Ausrichtung zueinander auf. Sie brauchen nicht, können aber beispielsweise parallel zueinander sein. Um eine derartige Fixierung zu erreichen kann die Lichtquelle oder der Lichtleiter z.B. einen Außendurchmesser aufweisen, welcher dem Innendurchmesser des Innengehäuses entspricht.

Um die Lichtquelle oder Lichtleiter innerhalb des Innengehäuses zu fixieren, kann diese z.B. an einer bestimmten Position entlang der Längsrichtung befestigt werden. Die Lichtquelle oder Lichtleiter kann demnach auch gegen ein Verschieben entlang der Längsrichtung des Innengehäuses fixiert sein.

Das Außengehäuse umgibt und beherbergt das Innengehäuse. Das Innengehäuse ist an dem Außengehäuse justierbar befestigt und zwar derart, dass verschiedene Neigungen zwischen der Längsrichtung des Innengehäuses und der Längsrichtung des Außengehäuses einstellbar sind. Die Längsrichtung des Innengehäuses ist somit gegenüber der Längsrichtung des Außengehäuses neigbar. Unter den verschiedenen Neigungen die zwischen der Längsrichtung des Innengehäuses und der Längsrichtung des Außengehäuses einstellbar sind ist in der Regel als Ausgangszustand auch die Neigung von Null Grad umfasst, d.h. die beiden Längsrichtungen sind parallel.

Die verschiedenen einstellbaren Neigungen sind erfindungsgemäß nicht lediglich in einer Ebene. Vielmehr kann die Längsrichtung des Innengehäuses zu der Längsrichtung des Außengehäuses schräg im Raum eingestellt werden.

Durch die Neigung des Innengehäuses relativ zum Außengehäuse, genauer gesagt, deren Längsrichtungen zueinander, kann somit die optische Achse des Lichtstrahls relativ zur Längsrichtung des Außengehäuses ausgerichtet werden. Oft ist es wünschenswert, dass die optische Achse des Lichtstrahls relativ zur Längsrichtung des Außengehäuses sehr präzise parallel bzw. koaxial verläuft.

In oder an dem Innengehäuse ist eine Linse oder ein Linsensystem angebracht, um eine Strahlformung des Lichtstrahls, insbesondere eine Kollimation des Lichtstrahls, zu bewirken. Vorzugsweise ist die Linse oder das Linsensystem fest mit dem Innengehäuse verbunden.

Eine Linse oder ein Linsensystem kann insbesondere an dem zur Einführung der Lichtquelle oder des Lichtleiters gegenüberliegendem Ende des Innengehäuses fixiert sein. Die Lichtquelle oder der Lichtleiter können demgegenüber entlang der Längsrichtung des Innengehäuses, insbesondere vor ihrer Fixierung, verschiebbar sein, so dass verschiedene Strahlformungen des Lichtstrahls durch die Linse bzw. das Linsensystem einstellbar sind und eine bestimmte Strahlformung auswählbar ist.

Das Innengehäuse ist demnach vorzugsweise ausgebildet, die Lichtquelle oder den Lichtleiter an verschiedenen Positionen entlang der Längsrichtung des Innengehäuses fixiert zu halten. Es kann z.B. vorgesehen sein, dass das Innengehäuse an einer bestimmten Position entlang seiner Längsrichtung eine Befestigungsstelle aufweist und die Lichtquelle oder der Lichtleiter an der Befestigungsstelle fixiert wird, wenn die Lichtquelle oder der Lichtleiter so weit in das Innengehäuse eingeführt ist oder durch Verschieben entlang der Längsrichtung des Innengehäuses so positioniert ist, wie es zum Erzielen der gewünschten Strahlformung, z.B. einer Kollimation, durch die Linse bzw. das Linsensystem erforderlich ist.

Es kann vorgesehen sein, dass das Innengehäuse mit der Lichtquelle oder dem Lichtleiter dauerhaft verbindbar ist, insbesondere, um die Lichtquelle oder den Lichtleiter an einer bestimmten Position entlang der Längsrichtung des Innengehäuses dauerhaft zu fixieren. Eine dauerhafte Fixierung kann z.B. durch Verkleben, Verklemmen, Verschrauben o.Ä. erreicht werden.

insbesondere wenn die Lichtquelle oder der Lichtleiter an dem Innengehäuse fixiert ist, kann eine Winkel-Ausrichtung des Lichtstrahls, d.h. eine Einstellung der Strahlrichtung erfolgen.

Dazu können ein oder mehrere verstellbare Justierelemente vorgesehen sein, mittels welchen die verschiedenen Neigungen zwischen der Längsrichtung des Innengehäuses und der Längsrichtung des Außengehäuses eingestellt werden können. Die Justierelemente können sich z.B. radial durch eine tubuläre Wandung des Außengehäuses hindurch erstrecken und jeweils gegen das Innengehäuse drücken.

Es kann vorgesehen sein, dass das Innengehäuse mit dem Außengehäuse dauerhaft verbindbar ist, derart, dass eine bestimmte Neigung zwischen der Längsrichtung des Innengehäuses und der Längsrichtung des Außengehäuses dauerhaft fixiert ist, d.h. nicht mehr einstellbar oder veränderbar ist.

Dazu können beispielsweise die Justierelemente dauerhaft fixiert, z.B. verklebt, verklemmt, verschraubt o.Ä. werden. Es kann auch vorgesehen sein, dass das Außengehäuse und das Innengehäuse eine oder mehrere Verbindungsstellen aufweisen, an oder mittels derer das Innengehäuse mit dem Außengehäuse dauerhaft verbunden, bspw. verklebt, verklemmt, verschraubt o.Ä. werden kann. Es kann ferner vorgesehen sein, dass die Justierelemente entfernbar sind bzw. entfernt werden, wenn das Außengehäuse mit dem Innengehäuse dauerhaft verbunden ist.

In einer Ausführungsform weist das Innengehäuse einen Befestigungsabschnitt auf, welcher formschlüssig an dem umliegenden Außengehäuse radial befestigt ist. Ferner weist das Innengehäuse einen Justageabschnitt auf, welcher zum umliegenden Außengehäuse radial beabstandet ist und welcher ausgebildet ist, die verschiedenen Neigungen zur Längsrichtung des Außengehäuses einzunehmen. Das Innengehäuse kann somit in Längsrichtung einen Befestigungsabschnitt und einen Justageabschnitt aufweisen, wobei der Befestigungsabschnitt relativ zum Außengehäuse fixiert ist und der Justageabschnitt relativ zum Außengehäuse neigbar ist sowie die Längsrichtung des Innengehäuses definiert. Gleichwohl kann das Innengehäuse einstückig ausgebildet sein und/oder aus einem elastischen Material geformt sein.
die Lichtquelle oder der Lichtleiter kann insbesondere im Justageabschnitt fixiert gehalten bzw. dauerhaft fixierbar sein.

Ferner kann das Innengehäuse einen elastisch biegbaren Biegungsabschnitt, insbesondere zwischen dem Befestigungsabschnitt und dem Justageabschnitt, aufweisen. Der Biegungsabschnitt kann z.B. dünnwandiger ausgebildet sein als der Befestigungsabschnitt und/oder der Justageabschnitt. Durch elastische Biegung des Biegungsabschnitts können die verschiedenen Neigungen zwischen der Längsrichtung des Innengehäuses und der Längsrichtung des Außengehäuses einstellbar sein.

insbesondere kann innerhalb des Biegungsabschnitts ein Abstand zwischen der äußeren Wandung des Lichtleiters und/oder eines im Biegungsabschnitt eingebrachten optischen Elements und der inneren Wandung des Innengehäuses vorliegen. Durch diesen Abstand wird ein Volumen gebildet, das als Hohlraum von der Umgebungsatmosphäre gefüllt sein kann, aber auch von jeglichen beliebigen Medien, beispielsweise Flüssigkeiten und/oder Polymeren, die insbesondere brechwertangepasst an den Lichtleiter und/oder das vorgenannte optische Element sein können und/oder von dem Lichtleiter und/oder optischen Element unterschiedliche Brechungsindices aufweisen können. Durch dieses Volumen, im Folgenden Anpassungsbereich genannt, ist es möglich, dass sich das Innengehäuse im Biegungsabschnitt gut verformen lässt. Ist insbesondere ein Lichtleiter im Innengehäuse montiert, reibt durch das Vorhandensein des Anpassungsbereichs die innere Wandung des Innengehäuses im Biegungsbereich während der Justage nicht an der äußeren Wandung des Lichtleiters. Dadurch werden einerseits Beschädigungen am Lichtleiter weitestgehend verhindert, und andererseits die Justage vereinfacht, da bei dieser keine Kraft entgegen der Reibungskräfte aufgebracht werden muss.

Für alle Ausführungsformen gilt, dass das Material des Innengehäuses zumindest im Biegungsabschnitt vorteilhaft so gewählt ist, dass der Biegungsbereich elastisch reversibel verformbar ist. Dadurch wird durch den Biegungsabschnitt eine elastische Rückstellkraft ausgeübt, die bestrebt ist, das Innengehäuse wieder in den parallelen Ausgangszustand zurückzubringen. Die Rückstellkraft wirkt während der Justage gegen die von dem und/oder den jeweiligen Justageelementen aufgebrachte Kraft. Dadurch ist eine genaue Justage möglich. Insbesondere vorteilhaft können diese beschriebenen Maßnahmen dazu führen, dass während der Justage das Innengehäuse immer zumindest an einem Justageelement anliegt.

Ebenso für alle entsprechenden Ausführungsformen gilt, dass vorteilhaft im Bereich des Biegungsabschnitts die Wandung des Innengehäuses dünner ausgebildet ist als in dem Justageabschnitt bzw. dem Befestigungsabschnitt. Dies begünstigt einerseits eine günstige Biegbarkeit. Andererseits hat die Verringerung der Wandstärke im Biegungsbereich die Folge, dass unerwünschte Verkippungen der Austrittsoptik unterdrückt werden. Wird nämlich das Innengehäuse während der Justage im Biegungsbereich verbogen, verschiebt und/oder verkippt sich ggf. durch die Verformung des Innengehäuses die Ebene der Austrittsoptik, beispielsweise die Kollimatoroptik und/oder die Austrittsfläche des Lichtleiters. Dies kann insbesondere durch die Betrachtung verdeutlicht werden, dass wenn das Innengehäuse verbogen wird, geometrisch auf der Außenseite der Biegung die Länge des Innengehäuses erhöht und auf der Innenseite der Biegung reduziert wird. Für das Material des Innengehäuses bedeutet dies, dass auf der Außenseite der Biegung Material des Innengehäuses gedehnt und auf der Innenseite Material des Innengehäuses komprimiert wird. Daraus kann beispielsweise eine Verkippung der Ebene der Austrittsoptik, einschließlich der Endfläche eines Lichtleiters, in Richtung der Außenseite der Biegung erfolgen, insbesondere wenn diese Komprimierung in keiner Verformung des Materials, sondern in einer lokalen Verdichtung enden. Ähnliches gilt für die Dehnung des Materials auf der Außenseite der Biegung.

Solche Verkippungen können die optischen Eigenschaften der gesamten Vorrichtung negativ beeinflussen und/oder die Vorrichtung sogar unbrauchbar machen. Durch die reduzierte Wandstärke im Biegungsbereich wird erreicht, dass die Komprimierung und/oder Dehnung des Innengehäuses während der durch die Justage bedingten Biegung im Biegungsbereich konzentriert wird, in dem aufgrund der reduzierten Wandstärke die Kompression und/oder Dehnung sozusagen erleichtert wird und insbesondere derart erfolgt, dass das Material des Innengehäuses in diesem Bereich entsprechend dem durch die Biegung geometrisch erforderlichen Betrag gedehnt und/oder gestaucht wird. Besonders vorteilhaft ist eine reversible Dehnung und/oder Stauchung.

Ein weiterer Vorteil dieser Maßnahme ist, dass durch die Justage und die Biegung bedingter mechanischer Stress, insbesondere Zug und/oder Druck, von der Austrittsoptik einschließlich der Endfläche eines Lichtleiters ferngehalten wird. Solch mechanischer Stress kann zu Dichteschwankungen innerhalb des optischen Elements der Austrittsoptik und/oder im Bereich der Endfläche des Lichtleiters führen und so ebenfalls die optischen Eigenschaften der gesamten Vorrichtung negativ beeinflussen.

Die Erfindung betrifft ferner ein Verfahren zur Ausrichtung eines Lichtstrahls, welcher entlang einer optischen Achse aus einer Lichtquelle oder einem Lichtleiter austritt.

Bei dem Verfahren wird eine Vorrichtung mit einem Außengehäuse und einer zumindest teilweise innerhalb des Außengehäuses angeordneten und justierbar an dem Außengehäuse angebrachten Innengehäuse bereitgestellt.

Die Lichtquelle oder der Lichtleiter wird ganz oder teilweise in das Innengehäuse eingeführt, ggf. nach den jeweiligen Erfordernissen entlang der Längsrichtung positioniert, und danach an dem Innengehäuse so fixiert, dass die optische Achse des Lichtstrahls relativ zur Längsrichtung des Innengehäuses fixiert ist. Vorzugsweise wird die Lichtquelle oder der Lichtleiter auch axial fixiert, d.h. gegen ein Verschieben entlang der Längsrichtung des Innengehäuses fixiert.

Das Innengehäuse wird außerdem, insbesondere nachdem die Lichtquelle oder der Lichtleiter an dem Innengehäuse fixiert wurde, relativ zum Außengehäuse justiert, indem eine bestimmte Neigung zwischen der Längsrichtung des Innengehäuses und der Längsrichtung des Außengehäuses eingestellt wird. Dadurch wird die optische Achse des Lichtstrahls relativ zur Längsrichtung des Außengehäuses ausgerichtet.

Vorzugsweise wird die Ausrichtung der optischen Achse des Lichtstrahls relativ zur Längsrichtung des Außengehäuses mit optischen Mitteln, z.B. auf einer optischen Bank, geprüft, bevor, während und/oder nachdem das Innengehäuse relativ zum Außengehäuse justiert wird bzw. wurde. Eine solche Prüfung findet insbesondere statt nachdem die Lichtquelle oder der Lichtleiter an dem Innengehäuse fixiert wurde.

Es kann vorgesehen sein, dass das Innengehäuse mit dem Außengehäuse dauerhaft verbunden wird, so dass die eingestellte Neigung zwischen der Längsrichtung des Innengehäuses und der Längsrichtung des Außengehäuses dauerhaft fixiert bleibt, nachdem das Innengehäuse relativ zum Außengehäuse justiert wurde, insbesondere nachdem die Ausrichtung der optischen Achse des Lichtstrahls relativ zur Längsrichtung des Außengehäuses geprüft wurde.

Um das Innengehäuse relativ zum Außengehäuse zu justieren, können insbesondere ein oder mehrere Justierelemente verstellt werden. Das oder die Justierelemente können, nachdem das Innengehäuse mit dem Außengehäuse dauerhaft verbunden wurde, entfernt werden.

Wie vorstehend beschrieben ist an dem Innengehäuse eine Strahlformungsoptik wie eine Linse oder ein Linsensystem, insbesondere zur Fokussierung oder Kollimation angebracht.

Nachdem die Lichtquelle oder der Lichtleiter in das Innengehäuse eingeführt wurde kann diese entlang der Längsrichtung des Innengehäuses verschoben werden bis eine bestimmte Strahlformung des Lichtstrahls, insbesondere eine gewünschte Fokussierung oder eine Kollimation des Lichtstrahls, bewirkt wird, bevor die Lichtquelle oder der Lichtleiter an dem Innengehäuse fixiert wird.

Bevor, während und/oder nachdem die Lichtquelle oder der Lichtleiter entlang der Längsrichtung des Innengehäuses verschoben wird bzw. wurde kann die Strahlformung des Lichtstrahls geprüft werden, insbesondere mit optischen Mitteln, z.B. auf einer optischen Bank. Auf diese Weise kann überprüft werden, ob eine gewünschte Strahlformung erreicht ist.

Ferner kann die Lichtquelle oder der Lichtleiter mit dem Innengehäuse dauerhaft verbunden werden, nachdem die Lichtquelle oder der Lichtleiter entlang der Längsrichtung des Innengehäuses verschoben wurde, insbesondere nachdem die Strahlformung des Lichtstrahls geprüft wurde.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

Es zeigen:
- Fig. 1: einen Schnitt durch eine Anordnung zur Strahlformung und Strahlausrichtung,
- Fig. 2: die Anordnung aus Fig. 1 mit einer Lichtquelle,
- Fig. 3: die Anordnung aus Fig. 1 mit einem Lichtleiter.

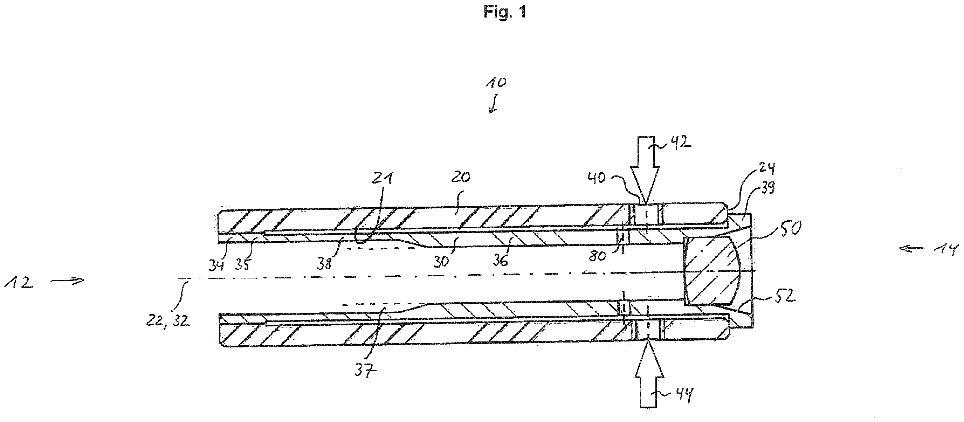

Bezugnehmend auf Fig. 1 umfasst eine Strahlausrichtungs-Anordnung 10 ein als Außenhülse ausgebildetes Außengehäuse 20 und ein darin justierbar angeordnetes, als Innenhülse ausgebildetes Innengehäuse 30. Sowohl das Außengehäuse 20 als auch das Innengehäuse 30 weisen eine beidseits geöffnete röhrenförmige Gestalt auf und definieren jeweils eine Längsrichtung 22 bzw. 32,

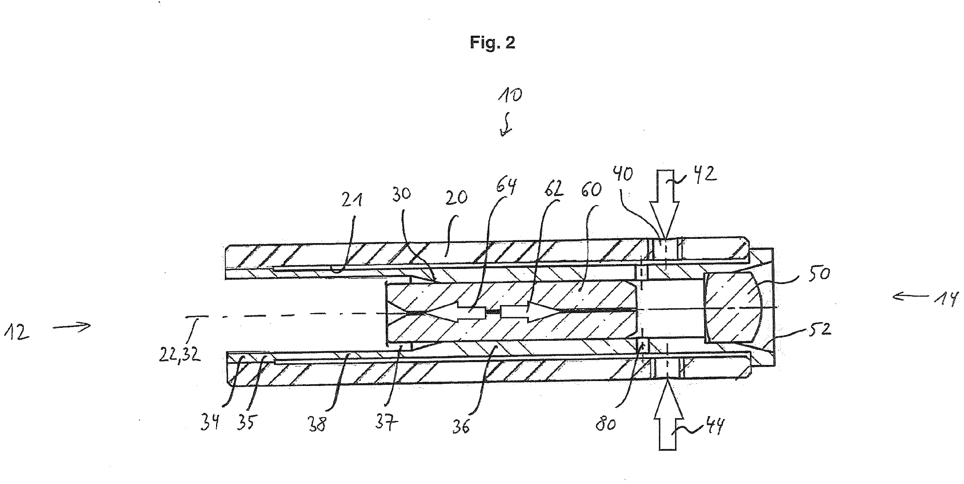

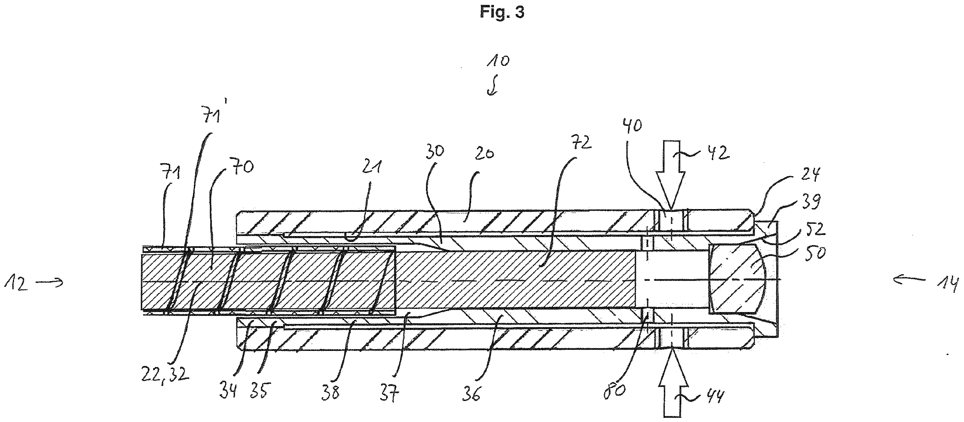

Bezugnehmend auf Fig. 2 und Fig. 3 ist die Strahlausrichtungs-Anordnung 10 ausgebildet als eine justierbare Aufnahme für eine auszurichtende Strahlquelle oder eine Lichtleitfaser. Es kann demnach eine Lichtquelle 60 (siehe Fig. 2) oder ein Lichtleiter 70 (siehe Fig. 3) in die tubuläre Strahlausrichtungs-Anordnung 10 und in das Innengehäuse 30 eingebracht werden. Die Lichtquelle 60 (z.B. ein Diodenlaser) oder der Lichtleiter 70 (z.B. eine Lichtleitfaser, ggf. mit umgebender Ferrule, in welche die Lichtleitfaser eingeklebt sein kann) wird zunächst in die Innenhülse eingebracht, axial justiert und an der Innenhülse befestigt, z.B. verklebt oder geklemmt. Dann kann eine Ausrichtung der Innenhülse 30 relativ zur Außenhülse 20 erfolgen.

Wieder bezugnehmend auf Fig. 1 weist das Innengehäuse 30 an einem ersten distalen Ende 12 entlang der Längsrichtung 32 einen Befestigungsabschnitt 34 auf, welcher in diesem Beispiel als umlaufender Kragen 35 ausgebildet ist und radial an der Innenwand 21 des Außengehäuses 20 befestigt ist. Die innere Aufnahme, d.h. die Innenhülse, ist demnach einseitig auf einer kurzen Länge formschlüssig in der Außenhülse gelagert und mit dieser verbunden, z.B. verschweißt, geklebt, gelötet, geklemmt, verschraubt, o.Ä. Auf der anderen Seite ist die Innenhülse über mehrere radial angeordnete Justierelemente 40 in der Außenhülse ausrichtbar (verkippbar).

Demnach weist das Innengehäuse 30 auf der Seite eines zweiten distalen Endes 14 entlang der Längsrichtung 32 einen Justageabschnitt 36 auf, welcher von dem Außengehäuse 20, bzw. dessen Innenwand beabstandet ist, d.h. frei im Außengehäuse steht. Das Innengehäuse 30 ist somit im Bereich des Justageabschnitts 36 gegenüber dem Außengehäuse 20 neigbar. In diesem Beispiel sind Neigungen im Bereich zwischen null und wenigen Grad vorgesehen. Es können dabei Neigungen in alle Richtungen senkrecht zur Längsachse 32 vorgesehen sein, insbesondere, wenn die Strahlausrichtungs-Anordnung 10 senkrecht zur Längsachse 32 rund ausgebildet ist.

Während im Ausgangszustand die Längsrichtung 32 des Innengehäuses 30, welche durch den Justageabschnitt 36 definiert wird, und die Längsrichtung 22 des Außengehäuses 20 vorteilhaft parallel zueinander ausgerichtet sind, werden die beiden Längsrichtungen 22, 32 durch Neigen des Justageabschnitts 36 in Schräglage zueinander gestellt.

Damit der Justageabschnitt 36 des Innengehäuses 30 problemlos neigbar ist, weist das Innengehäuse 30 einen Biegungsabschnitt 38 auf, welcher zwischen dem Justageabschnitt 36 und dem Befestigungsabschnitt 34 angeordnet ist. Im Bereich des Biegungsabschnitts 38 ist die Wandung des Innengehäuses dünner ausgebildet als in dem Justageabschnitt 36 bzw. dem Befestigungsabschnitt 34. Der Biegungsabschnitt ist, ebenso wie der Justageabschnitt 36 von dem umliegenden Außengehäuse 20 beabstandet, d.h. nicht damit verbunden, und bildet insbesondere den vorgenannten Anpassungsbereich 37, welcher einen Abstand zwischen dem Innengehäuse 30 und einer eingebrachten Lichtquelle 60 oder Lichtleiter 70 bewirkt. Beim Neigen des Innengehäuses 30 gegenüber dem Außengehäuse 20 wird das Innengehäuse 30 im Bereich des Biegungsabschnitts 38 elastisch gebogen. Die Verkippung erfolgt demnach durch elastische Verbiegung des dünnwandigen Teils der inneren Hülse. Dabei wird durch den Biegungsabschnitt 38 eine elastische Rückstellkraft ausgeübt, die bestrebt ist, das Innengehäuse 30 wieder in den parallelen Ausgangszustand zurückzubringen.

Um die Ausrichtung des Justageabschnitts 36 einzustellen sind im Außengehäuse 20 Justierelemente 40 eingebracht, Über diese Justierelemente 40, welche z.B. als Madenschrauben ausgebildet sein können, wird die innere Hülse ausgerichtet. Wie in der Fig. 1 zu sehen können z.B. zwei radial gegenüberliegend angeordnete Justierelemente 40 vorgesehen sein, um das Innengehäuse 30 entlang einer Achse senkrecht zur Längsachse 32 in positiver und negativer Richtung 42, 44 neigen zu können. Insgesamt können beispielsweise vier radial angeordnete Justierelemente 40 vorgesehen sein, um das Innengehäuse 30 in der Ebene senkrecht zu seiner Längsrichtung 32 entlang zweier linear unabhängiger Achsen in jeweils positiver und negativer Richtung neigen zu können.

Das Innengehäuse 30 ragt an seinem zweiten distalen Ende 14 aus dem Außengehäuse 20 mit einem Überstand 39 heraus, welcher in diesem Beispiel als umlaufender Kragen ausgebildet ist. Der Überstand 39 liegt verschiebbar an der Stirnseite 24 des Außengehäuses 20 an. Die Kontaktfläche zwischen dem Überstand 39 des Innengehäuses 30 und der Stirnseite 24 des Außengehäuses 20 bildet eine Verbindungsstelle an welcher das Innengehäuse 30 mit dem Außengehäuse 20 dauerhaft verbunden werden kann. Durch dauerhaftes Verbinden des justierten Innengehäuses 30 mit dem Außengehäuse 20 kann eine gewünschte Neigung der beiden Gehäuse zueinander dauerhaft fixiert werden. Insbesondere kann, wenn die Ausrichtung wie gewünscht erfolgt (und ggf. z.B. auf einer optischen Bank geprüft ist) die Innenhülse mit der Außenhülse im ausgerichteten Zustand dauerhaft fixiert werden. Dies kann z.B. durch laserschweißen, kleben, löten, klemmen, verschrauben o.Ä. geschehen. Nach erfolgter Fixierung können die Justageelemente 40 ggf. entfernt werden.

Auf der Seite des zweiten distalen Endes 14 ist in das Innengehäuse 30 eine Optik 50 eingebracht, welche insbesondere als Kollimatoroptik ausgebildet sein kann. In dem dargestellten Beispiel ist die Optik 50 als Einzellinse (z.B. Asphäre, Grinlinse) ausgebildet. Es kann aber auch ein mehrlinsiges, insbesondere verkittetes System (z.B. Achromat, Triplet) oder auch ein Linsensystem, welches mehrere Linsengruppen umfasst, vorgesehen sein. Mehrlinsige Systeme sind i.d.R. achromatisch oder apochromatisch und für mehrere Wellenlängen entsprechend korrigiert, so dass auch mehrfarbiges Licht (Laserlicht) in hoher Qualität kollimiert werden kann.

Die Optik 50 wird durch eine Linsenhalterung 52 an dem Innengehäuse gehalten, wobei die Linsenhalterung 52 in diesem Beispiel als eine kegelförmige Aufnahme des Innengehäuses ausgebildet ist.

Wieder bezugnehmend auf Fig. 2 und Fig. 3 ist die Strahlausrichtungs-Anordnung 10 bzw. das Innengehäuse 30 ausgebildet, eine Lichtquelle 60 oder einen Lichtleiter 70 aufzunehmen und zu fassen. Die Lichtquelle 60 oder der Lichtleiter 70 wird dazu entlang der Längsrichtung 32 in das Innengehäuse 30 eingebracht, in dem gezeigten Beispiel ausgehend von der Seite des ersten distalen Endes 12. Eine Lichtquelle 60 wird i.d.R. vollständig in das Innengehäuse 30 eingeschoben, während ein Lichtleiter 70 teilweise, insbesondere mit dem Lichtleiterkopf 72 in das Innengehäuse 30 eingeführt wird.

Die Lichtquelle 60 oder der Lichtleiter 70 werden insbesondere in den Justageabschnitt 36 des Innengehäuses eingeführt und können entlang der Längsrichtung 32 auf die Optik 50 zubewegt (Richtung 62) oder von der Optik 50 wegbewegt (Richtung 64) werden, um eine gewünschte Strahlformung zu erzielen. Während die Lichtquelle 60 oder der Lichtleiter 70 positioniert wird, kann eine Überprüfung der durch die Optik 50 erzielten Strahlformung stattfinden. Dies kann insbesondere mit optischen Mitteln, z.B. auf einer optischen Bank erfolgen.

Die Lichtquelle 60 oder der Lichtleiter 70 liegen im Justageabschnitt 36 formschlüssig an der Innenwand des Innengehäuses 30 an, so dass die optische Achse des aus dem jeweiligen Lichtaustritt 61, 72 austretenden Lichtstrahls relativ zur Längsrichtung 32 des Innengehäuses 30 fixiert ist. Hierbei können durchaus kleine Abweichungen von der Parallelität vorliegen; solche Abweichungen können durch ein Justieren des Innengehäuses 30 wieder ausgeglichen werden. Im Biegungsabschnitt 38 und in diesem Beispiel zusätzlich auch im Befestigungsabschnitt 34 ist zweckmäßig ein Anpassungsbereich 37 vorgesehen. In diesem Fall besteht demnach zwischen der Innenhülse 30 und dem Lichtleiter 70 ein Abstand, welcher sich über den Biegungsabschnitt 38 und den Befestigungsabschnitt 34 bis hin zu dem distalen Ende 12 erstreckt. Zumindest in einen Teil des Anpassungsbereichs 37 ist in diesem Beispiel ein Schlauch 71 eingeführt, welcher den Lichtleiter 70 umgibt und schützt. Der Schlauch 71 kann z.B. eine spiralförmige Stabilisierung 71' umfassen, um die Steifigkeit zu erhöhen. Der Schlauch 70 wird z.B. nach der axialen und radialen Justierung eingeführt und fixiert und dient insbesondere dem mechanischen Schutz des Lichtleiters 70.

Ist eine gewünschte Strahlformung, z.B. eine Kollimation, erreicht, kann die Lichtquelle 60 bzw. der Lichtleiter 70 an dem Innengehäuse 30 dauerhaft fixiert werden. Hierzu können beispielsweise eine oder mehrere Öffnungen (nicht dargestellt) in dem Innengehäuse 30 vorgesehen sein, mittels welchen die Lichtquelle 60 oder der Lichtleiter 70 an dem Innengehäuse festgeklebt werden kann. Ferner sind in dem Innengehäuse 30 Entlüftungsöffnungen 80 vorgesehen, die für einen Einsatz (Hoch)vakuum vorgesehen sind.

Eine Strahlausrichtungs-Anordnung 10 kann insbesondere dazu dienen, eine Kollimatoroptik mit kollinear ausgerichtetem Strahl bereitzustellen. Anwendungen dafür sind beispielsweise Positionssensorik zum optischen Ausrichten von Maschinenteilen, Holographie, interferometrische Schwingungsanalyse oder Sensoranwendungen in der interferometrie.

Es ist dem Fachmann ersichtlich, dass die vorstehend beschriebenen Ausführungsformen beispielhaft zu verstehen ist, und die Erfindung nicht auf diese beschränkt ist, sondern einzig durch den Schutzumfang der Ansprüche bestimmt ist.

## Patentansprüche

1. Vorrichtung zur Ausrichtung eines Lichtstrahls, welcher entlang einer optischen Achse aus einer Lichtquelle (60) oder einem Lichtleiter (70) austritt, umfassend
- ein Außengehäuse (20), welches eine Längsrichtung (22) definiert,
- ein Innengehäuse (30), welches eine Längsrichtung (32) definiert und zumindest teilweise innerhalb des Außengehäuses (20) angeordnet ist,
- wobei das Innengehäuse (30) ausgebildet ist, die Lichtquelle (60) oder den Lichtleiter (70) aufzunehmen und fixiert zu halten, derart, dass die optische Achse des Lichtstrahls relativ zur Längsrichtung des Innengehäuses (30) fixiert ist,
- wobei das Innengehäuse (30) an dem Außengehäuse (20) justierbar befestigt ist, derart, dass verschiedene Neigungen zwischen der Längsrichtung des Innengehäuses (30) und der Längsrichtung des Außengehäuses (20) einstellbar sind, um die optische Achse des Lichtstrahls relativ zur Längsrichtung des Außengehäuses (20) auszurichten, wobei das Innengehäuse (30) in alle Richtungen senkrecht zu seiner Längsrichtung (32) neigbar ist, **dadurch gekennzeichnet, dass** eine Linse oder ein Linsensystem in oder an dem Innengehäuse (30) angebracht ist, um eine Strahlformung des Lichtstrahls zu bewirken.

2. Vorrichtung zur Ausrichtung eines Lichtstrahls gemäß dem vorstehenden Anspruch, wobei die Linse oder das Linsensystem dazu eingerichtet ist, eine Kollimation des Lichtstrahls zu bewirken.

3. Vorrichtung zur Ausrichtung eines Lichtstrahls gemäß einem der vorstehenden Ansprüche, wobei das Innengehäuse (30) ausgebildet ist, die Lichtquelle (60) oder den Lichtleiter (70) an verschiedenen Positionen entlang der Längsrichtung des Innengehäuses (30) fixiert zu halten, insbesondere, um eine bestimmte Strahlformung des Lichtstrahls auszuwählen.

4. Vorrichtung zur Ausrichtung eines Lichtstrahls gemäß einem der vorstehenden Ansprüche, wobei das Innengehäuse (30) mit der Lichtquelle (60) oder dem Lichtleiter (70) dauerhaft verbindbar ist, insbesondere, um die Lichtquelle (60) oder den Lichtleiter (70) an einer bestimmten Position entlang der Längsrichtung des Innengehäuses (30) dauerhaft zu fixieren.

5. Vorrichtung zur Ausrichtung eines Lichtstrahls gemäß einem der vorstehenden Ansprüche umfassend ein oder mehrere verstellbare Justierelemente (40) mittels welchen die verschiedenen Neigungen zwischen der Längsrichtung des Innengehäuses (30) und der Längsrichtung des Außengehäuses (20) eingestellt werden können.

6. Vorrichtung zur Ausrichtung eines Lichtstrahls gemäß einem der vorstehenden Ansprüche, wobei das Innengehäuse (30) mit dem Außengehäuse (20) dauerhaft verbindbar ist, derart, dass eine bestimmte Neigung zwischen der Längsrichtung des Innengehäuses (30) und der Längsrichtung des Außengehäuses (20) dauerhaft fixiert ist.

7. Vorrichtung zur Ausrichtung eines Lichtstrahls gemäß einem der vorstehenden Ansprüche,
- wobei das Innengehäuse (30) einen Befestigungsabschnitt (34) aufweist, welcher an dem umliegenden Außengehäuse (20) befestigt ist, und
- wobei das Innengehäuse (30) einen Justageabschnitt (36) aufweist, welcher zum umliegenden Außengehäuse (20) beabstandet ist und welcher ausgebildet ist, die verschiedenen Neigungen zur Längsrichtung des Außengehäuses (20) einzunehmen.

8. Vorrichtung zur Ausrichtung eines Lichtstrahls gemäß einem der vorstehenden Ansprüche, insbesondere gemäß Anspruch 7,
- wobei das Innengehäuse (30) einen elastisch biegbaren Biegungsabschnitt (38), insbesondere zwischen dem Befestigungsabschnitt (34) und dem Justageabschnitt (36), aufweist, und
- wobei durch elastische Biegung des Biegungsabschnitts (38) die verschiedenen Neigungen zwischen der Längsrichtung des Innengehäuses (30) und der Längsrichtung des Außengehäuses (20) einstellbar sind.

9. Vorrichtung zur Ausrichtung eines Lichtstrahls gemäß Anspruch 8 bei Rückbezug auf Anspruch 7,
- wobei das Innengehäuse (30) eine Wandung aufweist, welche im Bereich des Biegungsabschnitts (38) dünner ausgebildet ist als im Bereich des Justageabschnitts (36) und/oder im Bereich des Befestigungsabschnitts (34).

10. Vorrichtung zur Ausrichtung eines Lichtstrahls gemäß Anspruch 8 oder 9, wobei die Wandung des Innengehäuses (30) im Bereich des Biegungsabschnitts (38) in Längsrichtung des Innengehäuses (30) dehnbar und/oder stauchbar ausgebildet ist, um Abweichungen der Lichtaustrittsebene des Lichtleiters (70) oder der Lichtquelle (60) von der zur Längsrichtung des Innengehäuses (30) orthogonalen Ebene zu vermindern.

11. Verfahren zur Ausrichtung eines Lichtstrahls, welcher entlang einer optischen Achse aus einer Lichtquelle (60) oder einem Lichtleiter (70) austritt, bei welchem
- eine Vorrichtung zur Ausrichtung eines Lichtstrahls mit einem Außengehäuse (20) und einem zumindest teilweise innerhalb des Außengehäuses (20) angeordneten und justierbar an dem Außengehäuse (20) angebrachtem Innengehäuse (30), wobei eine Linse oder ein Linsensystem in oder an dem Innengehäuse (30) angebracht ist, um eine Strahlformung des Lichtstrahls zu bewirken, insbesondere gemäß einem der vorstehenden Ansprüche, bereit gestellt wird,
- die Lichtquelle (60) oder der Lichtleiter (70) in das Innengehäuse (30) eingeführt wird,
- die Lichtquelle (60) oder der Lichtleiter (70) an dem Innengehäuse (30) fixiert wird, so dass die optische Achse des Lichtstrahls relativ zur Längsrichtung des Innengehäuses (30) fixiert ist,
- das Innengehäuse (30) zusammen mit der Linse oder dem Linsensystem relativ zum Außengehäuse (20) justiert wird indem eine bestimmte Neigung zwischen der Längsrichtung des Innengehäuses (30) und der Längsrichtung des Außengehäuses (20) eingestellt wird, um die optische Achse des Lichtstrahls relativ zur Längsrichtung des Außengehäuses (20) auszurichten, wobei das Innengehäuse (30) in alle Richtungen senkrecht zu seiner Längsrichtung neigbar ist.

12. Verfahren zur Ausrichtung eines Lichtstrahls gemäß dem vorstehenden Anspruch, wobei die Ausrichtung der optischen Achse des Lichtstrahls relativ zur Längsrichtung des Außengehäuses (20) geprüft wird, während und/oder nachdem das Innengehäuse (30) relativ zum Außengehäuse (20) justiert wird bzw. wurde.

13. Verfahren zur Ausrichtung eines Lichtstrahls gemäß einem der vorstehenden Ansprüche, wobei das Innengehäuse (30) mit dem Außengehäuse (20) dauerhaft verbunden wird, so dass die eingestellte Neigung zwischen der Längsrichtung des Innengehäuses (30) und der Längsrichtung des Außengehäuses (20) dauerhaft fixiert ist, nachdem das Innengehäuse (30) relativ zum Außengehäuse (20) justiert wurde, insbesondere nachdem die Ausrichtung der optischen Achse des Lichtstrahls relativ zur Längsrichtung des Außengehäuses (20) geprüft wurde.

14. Verfahren zur Ausrichtung eines Lichtstrahls gemäß einem der vorstehenden Ansprüche,
- wobei ein oder mehrere Justierelemente (40) verstellt werden, um das Innengehäuse (30) relativ zum Außengehäuse (20) zu justieren und
- wobei das oder die Justierelemente (40) entfernt werden nachdem das Innengehäuse (30) mit dem Außengehäuse (20) dauerhaft verbunden wurde.

15. Verfahren zur Ausrichtung eines Lichtstrahls gemäß einem der vorstehenden Ansprüche, wobei die Lichtquelle (60) oder der Lichtleiter (70) entlang der Längsrichtung des Innengehäuses (30) verschoben wird bis eine bestimmte Strahlformung des Lichtstrahls, insbesondere eine Kollimation des Lichtstrahls, bewirkt wird, bevor die Lichtquelle (60) oder der Lichtleiter (70) an dem Innengehäuse (30) fixiert wird.

16. Verfahren zur Ausrichtung eines Lichtstrahls gemäß dem vorstehenden Anspruch, wobei die Strahlformung des Lichtstrahls geprüft wird, während und/oder nachdem die Lichtquelle (60) oder der Lichtleiter (70) entlang der Längsrichtung des Innengehäuses (30) verschoben wird bzw. wurde.

17. Verfahren zur Ausrichtung eines Lichtstrahls gemäß dem vorstehenden Anspruch, wobei die Lichtquelle (60) oder der Lichtleiter (70) mit dem Innengehäuse (30) dauerhaft verbunden wird, nachdem die Lichtquelle (60) oder der Lichtleiter (70) entlang der Längsrichtung des Innengehäuses (30) verschoben wurde, insbesondere nachdem die Strahlformung des Lichtstrahls geprüft wurde.

## Claims

1. A device for aligning a light beam that is exiting from a light source (60) or from a light guide (70) along an optical axis, comprising:
- an outer housing (20) defining a longitudinal direction (22);
- an inner housing (30) defining a longitudinal direction (32) and being arranged at least partially inside the outer housing (20);
- the inner housing (30) being designed to accommodate and support in a fixed manner the light source (60) or the light guide (70) such that the optical axis of the light beam is fixed relative to the longitudinal direction of the inner housing (30);
- wherein the inner housing (30) is mounted to the outer housing in an adjustably manner such that different inclinations are adjustable between the longitudinal direction of the inner housing (30) and the longitudinal direction of the outer housing (20) in order to align the optical axis of the light beam relative to the longitudinal direction of the outer housing (20), the inner housing (30) being inclinable in any direction perpendicular to its longitudinal direction (32);
**characterized in that** a lens or a lens system is mounted in or on the inner housing (30) to cause beam forming of the light beam.

2. The device for aligning a light beam according to the preceding claim, wherein the lens or the lens system is adapted to cause collimation of the light beam.

3. The device for aligning a light beam according to any one of the preceding claims, wherein the inner housing (30) is configured so as to fixedly support the light source (60) or the light guide (70) at different positions along the longitudinal direction of the inner housing (30), in particular for selecting a specific type of beam forming of the light beam.

4. The device for aligning a light beam according to any one of the preceding claims, wherein the inner housing (30) is permanently connectable to the light source (60) or to the light guide (70), in particular in order to permanently fix the light source (60) or the light guide (70) at a specific position along the longitudinal direction of the inner housing (30).

5. The device for aligning a light beam according to any one of the preceding claims, comprising one or more adjustable adjusting element(s) (40) that can be used to adjust the different inclinations between the longitudinal direction of the inner housing (30) and the longitudinal direction of the outer housing (20).

6. The device for aligning a light beam according to any one of the preceding claims, wherein the inner housing (30) is permanently connectable to the outer housing (20) in a manner so as to permanently fix a specific inclination between the longitudinal direction of the inner housing (30) and the longitudinal direction of the outer housing (20).

7. The device for aligning a light beam according to any one of the preceding claims,
- wherein the inner housing (30) has a fastening portion (34) that is secured to the surrounding outer housing (20); and
- wherein the inner housing (30) has an adjustment portion (36) that is spaced apart from the surrounding outer housing (20) and is adapted to assume the different inclinations relative to the longitudinal direction of the outer housing (20).

8. The device for aligning a light beam according to any one of the preceding claims, in particular according to claim 7,
- wherein the inner housing (30) has an resiliently deflectable bending portion (38), in particular between the fastening portion (34) and the adjustment portion (36); and
- wherein the different inclinations between the longitudinal direction of the inner housing (30) and the longitudinal direction of the outer housing (20) are adjustable by resiliently deflecting the bending portion (38).

9. The device for aligning a light beam according to claim 8 when dependent on claim 7,
- wherein the inner housing (30) has a wall which is thinner in the area of the bending portion (38) than in the area of the adjustment portion (36) and/or in the area of the fastening portion (34).

10. The device for aligning a light beam according to claim 8 or 9, wherein in the area of the bending portion (38) the wall of the inner housing (30) is designed so as to be stretchable and/or compressible in the longitudinal direction of the inner housing (30) in order to reduce deviations of the light exit plane of the light guide (70) or of the light source (60) from the plane perpendicular to the longitudinal direction of the inner housing (30).

11. A method for aligning a light beam that is exiting from a light source (60) or from a light guide (70) along an optical axis, wherein:
- a device for aligning a light beam is provided, in particular according to any one of the preceding claims, which comprises an outer housing (20) and an inner housing (30) that is arranged at least partially inside the outer housing (20) and is adjustably mounted to the outer housing, with a lens or a lens system mounted in or to the inner housing (30) for causing beam forming of the light beam;
- the light source (60) or the light guide (70) is inserted into the inner housing;
- the light source (60) or the light guide (70) is fixed to the inner housing (30) such that the optical axis of the light beam is fixed relative to the longitudinal direction of the inner housing (30);
- the inner housing (30) together with the lens or the lens system is adjusted relative to the outer housing (20) by adjusting a specific inclination between the longitudinal direction of the inner housing (30) and the longitudinal direction of the outer housing (20) in order to align the optical axis of the light beam relative to the longitudinal direction of the outer housing (20), the inner housing (30) being inclinable in any direction perpendicular to its longitudinal direction.

12. The method for aligning a light beam according to the preceding claim, wherein the alignment of the optical axis of the light beam relative to the longitudinal direction of the outer housing (20) is verified while and/or after the inner housing (30) is being and/or has been adjusted relative to the outer housing (20).

13. The method for aligning a light beam according to any one of the preceding claims,
wherein the inner housing (30) is permanently connected to the outer housing (20) such that the adjusted inclination between the longitudinal direction of the inner housing (30) and the longitudinal direction of the outer housing (20) is permanently fixed after the inner housing (30) has been adjusted relative to the outer housing (20), in particular after the alignment of the optical axis of the light beam relative to the longitudinal direction of the outer housing (20) has been verified.

14. The method for aligning a light beam according to any one of the preceding claims,
- wherein one or more adjusting element(s) (40) is/are adjusted in order to adjust the inner housing (30) relative to the outer housing (20); and
- wherein the one or more adjusting element(s) (40) is/are removed once the inner housing (30) has been permanently connected to the outer housing (20).

15. The method for aligning a light beam according to any one of the preceding claims,
wherein the light source (60) or the light guide (70) is displaced along the longitudinal direction of the inner housing (30) until a specific type of beam forming of the light beam has been effected, in particular collimation of the light beam, before the light source (60) or the light guide (70) is fixed to the inner housing (30).

16. The method for aligning a light beam according to the preceding claim, wherein the beam forming of the light beam is verified while and/or after the light source (60) or the light guide (70) is being or has been displaced along the longitudinal direction of the inner housing (30).

17. The method for aligning a light beam according to the preceding claim, wherein the light source (60) or the light guide (70) is permanently connected to the inner housing (30) after the light source (60) or the light guide (70) has been displaced along the longitudinal direction of the inner housing (30), in particular after the beam forming of the light beam has been verified.

## Revendications

1. Dispositif d'alignement d'un rayon lumineux sortant d'une source lumineuse (60) ou d'un conducteur de lumière (70), le long d'un axe optique, comprenant
- un boîtier extérieur (20) qui définit une direction longitudinale (22),
- un boîtier intérieur (30) qui définit une direction longitudinale (32) et est disposé au moins en partie dans le boîtier extérieur (20),
- le boîtier intérieur (30) étant réalisé pour accueillir et maintenir de façon fixe la source lumineuse (60) ou le conducteur de lumière (70), de manière à ce que l'axe optique du rayon lumineux soit fixé par rapport à la direction longitudinale du boîtier intérieur (30),
- le boîtier intérieur (30) étant fixé de manière ajustable au boîtier extérieur (20), de manière à ce que différentes inclinaisons puissent être réglées entre la direction longitudinale du boîtier intérieur (30) et la direction longitudinale du boîtier extérieur (20), afin d'aligner l'axe optique du rayon lumineux par rapport à la direction longitudinale du boîtier extérieur (20), le boîtier intérieur (30) pouvant être incliné dans toutes les directions perpendiculaires à sa direction longitudinale (32),
**caractérisé en ce qu'**une lentille ou un système de lentilles est installé(e) dans ou sur le boîtier intérieur (30), aux fins de produire une mise en forme de rayon du rayon lumineux.

2. Dispositif d'alignement d'un rayon lumineux selon la revendication précédente, dans lequel la lentille ou le système de lentilles est conçu(e) pour produire une collimation du rayon lumineux.

3. Dispositif d'alignement d'un rayon lumineux selon l'une des revendications précédentes, dans lequel le boîtier intérieur (30) est conçu pour maintenir la source lumineuse (60) ou le conducteur de lumière (70) de manière fixe en différentes positions le long de la direction longitudinale du boîtier intérieur (30), notamment pour choisir une mise en forme définie du rayon lumineux.

4. Dispositif d'alignement d'un rayon lumineux selon l'une des revendications précédentes, dans lequel le boîtier intérieur (30) peut être relié de façon permanente à la source lumineuse (60) ou au conducteur de lumière (70), notamment pour fixer la source lumineuse (60) ou le conducteur de lumière (70) de façon permanente dans une position définie le long de la direction longitudinale du boîtier intérieur (30).

5. Dispositif d'alignement d'un rayon lumineux selon l'une des revendications précédentes, comprenant un ou plusieurs éléments d'ajustage (40) réglables qui permettent de régler les différentes inclinaisons entre la direction longitudinale du boîtier intérieur (30) et la direction longitudinale du boîtier extérieur (20).

6. Dispositif d'alignement d'un rayon lumineux selon l'une des revendications précédentes, dans lequel le boîtier intérieur (30) peut être relié de façon permanente au boîtier extérieur (20), de manière à ce qu'une inclinaison définie soit fixée de façon permanente entre la direction longitudinale du boîtier intérieur (30) et la direction longitudinale du boîtier extérieur (20).

7. Dispositif d'alignement d'un rayon lumineux selon l'une des revendications précédentes,
- dans lequel le boîtier intérieur (30) présente une partie de fixation (34) qui est fixée au boîtier extérieur (20) qui l'entoure, et
- dans lequel le boîtier intérieur (30) présente une partie d'ajustage (36) qui est située à distance du boîtier extérieur (20) qui l'entoure, et qui est conçue pour occuper les différentes inclinaisons par rapport à la direction longitudinale du boîtier extérieur (20).

8. Dispositif d'alignement d'un rayon lumineux selon l'une des revendications précédentes, en particulier selon la revendication 7,
- dans lequel le boîtier intérieur (30) présente une partie de flexion (38) élastiquement flexible, notamment entre la partie de fixation (34) et la partie d'ajustage (36), et
- dans lequel la flexion élastique de la partie de flexion (38) permet de régler les différentes inclinaisons entre la direction longitudinale du boîtier intérieur (30) et la direction longitudinale du boîtier extérieur (20).

9. Dispositif d'alignement d'un rayon lumineux selon la revendication 8, avec référence à la revendication 7,
- dans lequel le boîtier intérieur (30) présente une paroi qui est réalisée sous une forme plus mince dans la région de la partie de flexion (38) que dans la région de la partie d'ajustage (36) et/ou dans la région de la partie de fixation (34).

10. Dispositif d'alignement d'un rayon lumineux selon la revendication 8 ou 9, dans lequel la paroi du boîtier intérieur (30) est réalisée, dans la région de la partie de flexion (38), de manière à pouvoir être allongée et/ou comprimée dans la direction longitudinale du boîtier intérieur (30), afin de réduire des écarts du plan de sortie de lumière du conducteur de lumière (70) ou de la source lumineuse (60) par rapport au plan qui est orthogonal à la direction longitudinale du boîtier intérieur (30).

11. Procédé d'alignement d'un rayon lumineux sortant d'une source lumineuse (60) ou d'un conducteur de lumière (70), le long d'un axe optique, selon lequel
- est mis à disposition un dispositif d'alignement d'un rayon lumineux, comprenant un boîtier extérieur (20) et un boîtier intérieur (30) disposé au moins en partie dans le boîtier extérieur (20) et monté de façon ajustable sur le boîtier extérieur (20), une lentille ou un système de lentilles étant installé(e) dans ou sur le boîtier intérieur (30), aux fins de produire une mise en forme de rayon du rayon lumineux, en particulier selon l'une des revendications précédentes,
- la source lumineuse (60) ou le conducteur de lumière (70) est introduit(e) dans le boîtier intérieur (30),
- la source lumineuse (60) ou le conducteur de lumière (70) est fixé(e) sur le boîtier intérieur (30) de manière à ce que l'axe optique du rayon lumineux soit fixé par rapport à la direction longitudinale du boîtier intérieur (30),
- le boîtier intérieur (30), conjointement avec la lentille ou le système de lentilles, est ajusté par rapport au boîtier extérieur (20) en réglant une inclinaison définie entre la direction longitudinale du boîtier intérieur (30) et la direction longitudinale du boîtier extérieur (20), aux fins d'aligner l'axe optique du rayon lumineux par rapport à la direction longitudinale du boîtier extérieur (20), le boîtier intérieur (30) pouvant être incliné dans toutes les directions perpendiculaires à sa direction longitudinale.

12. Procédé d'alignement d'un rayon lumineux selon la revendication précédente, selon lequel l'alignement de l'axe optique du rayon lumineux par rapport à la direction longitudinale du boîtier extérieur (20) est vérifié, pendant et/ou après que le boîtier intérieur (30) est ou a été ajusté par rapport au boîtier extérieur (20).

13. Procédé d'alignement d'un rayon lumineux selon l'une des revendications précédentes, selon lequel le boîtier intérieur (30) est relié de façon permanente au boîtier extérieur (20), de manière à ce que l'inclinaison réglée entre la direction longitudinale du boîtier intérieur (30) et la direction longitudinale du boîtier extérieur (20) soit fixée de façon permanente après que le boîtier intérieur (30) a été ajusté par rapport au boîtier extérieur (20), notamment après que l'alignement de l'axe optique du rayon lumineux par rapport à la direction longitudinale du boîtier extérieur (20) a été vérifié.

14. Procédé d'alignement d'un rayon lumineux selon l'une des revendications précédentes,
- selon lequel un ou plusieurs éléments d'ajustage (40) sont réglés pour ajuster le boîtier intérieur (30) par rapport au boîtier extérieur (20), et
- selon lequel le ou les éléments d'ajustage (40) est/sont retiré(s) après que le boîtier intérieur (30) a été relié de façon permanente au boîtier extérieur (20).

15. Procédé d'alignement d'un rayon lumineux selon l'une des revendications précédentes, selon lequel la source lumineuse (60) ou le conducteur de lumière (70) est déplacé(e) suivant la direction longitudinale du boîtier intérieur (30), jusqu'à obtention d'une mise en forme définie du rayon lumineux, en particulier d'une collimation du rayon lumineux, avant que la source lumineuse (60) ou le conducteur de lumière (70) ne soit fixé(e) au boîtier intérieur (30).

16. Procédé d'alignement d'un rayon lumineux selon la revendication précédente, selon lequel la mise en forme du rayon lumineux est vérifiée pendant et/ou après que la source lumineuse (60) ou le conducteur de lumière (70) est ou a été déplacé(e) suivant la direction longitudinale du boîtier intérieur (30).

17. Procédé d'alignement d'un rayon lumineux selon la revendication précédente, selon lequel la source lumineuse (60) ou le conducteur de lumière (70) est relié(e) de façon permanente au boîtier intérieur (30), après que la source lumineuse (60) ou le conducteur de lumière (70) a été déplacé(e) suivant la direction longitudinale du boîtier intérieur (30), notamment après que la mise en forme du rayon lumineux a été vérifiée.
